# EUROPEAN PATENT SPECIFICATION

(11) **EP 2 846 675 B1**
(45) Date of publication and mention of the grant of the patent: **18.10.2017**
(21) Application number: 13722650.2
(22) Date of filing: 02.05.2013
(51) Int. Cl.: A47L 15/00, A47L 15/42, A47L 15/48

(54) **METHOD FOR OPERATING A DISHWASHER CONFIGURED AS A PROGRAM-OPERATED MACHINE, AND A CORRESPONDING DISHWASHER**
VERFAHREN ZUM BETREIBEN EINER ALS PROGRAMMAUTOMAT KONFIGURIERTEN GESCHIRRSPÜLMASCHINE SOWIE ENTSPRECHENDE GESCHIRRSPÜLMASCHINE
PROCÉDÉ DE MISE EN OEUVRE D'UN LAVE-VAISSELLE CONÇU COMME UNE MACHINE À COMMANDE PROGRAMMÉE ET LAVE-VAISSELLE CORRESPONDANT

(30) Priority: 07.05.2012 DE 102012207565
(43) Date of publication of application: 18.03.2015
(73) Proprietor: Premark FEG L.L.C., Glenview IL 60025 (US)
(72) Inventor: DISCH, Harald, 79215 Elzach (DE); BERNER, Dietrich, 73550 Waldstetten (DE); JAKWAY, Allen, 77736 Zell Am Hamersbach (DE); MAIER-LAXHUBER, Peter, 85276 Pfaffenhofen a.s.Ilm (DE); SCHMIDT, Ralf, 85354 Freising (DE); WORZ, Reiner, 85293 Reichertshausen (DE)
(74) Representative: Trinks, Ole
(86) International application number: PCT/US2013/039172
(87) International publication number: WO 2013/169548

(56) References cited:
- EP-A1- 2 574 267
- DE-A1-102005 023 429
- DE-A1-102008 043 548
- DE-A1-102010 043 467
- DE-A1-102011 087 322
- US-A- 1 559 727
- US-A1- 2010 154 830

## Description

### Technical Field

The invention relates to a method for operating a dishwasher, in particular a commercial dishwasher, which is configured as a program-operated machine, and to a corresponding dishwasher.

### Background

Program-operated machines are dishwashers which can be loaded and unloaded manually. The program-operated machines (also referred to as box-type warewashers or batch dishwashers) may include hood-type dishwashers or front-loader dishwashers. Front-loader dishwashers may be in the form of under-counter dishwashers, counter-top dishwashers or free-standing front-loader dishwashers.

A dishwasher configured as a program-operated machine usually has a treatment chamber for cleaning wash items. The treatment chamber usually has arranged beneath it a wash tank, in which liquid can flow back out of the treatment chamber by gravity. The wash tank contains wash liquid, which is usually water, to which, if appropriate, detergent can be fed.

A dishwasher configured as a program-operated machine also usually has a wash system having a wash pump, having a pipe system connected to the wash pump and having a multiplicity of spray nozzles formed in at least one wash arm.

The wash liquid located in the wash tank can be conveyed by the wash pump, via the pipe system, to the wash nozzles and sprayed in the treatment chamber, by the wash nozzles, onto the wash items which are to be cleaned. The sprayed wash liquid then flows back into the wash tank.

Such a dishwasher configured as a program-operated machine is known, for example, from DE 10 2005 023 429 A1. DE10 2008 043 548 discloses a method for operating a dishwasher and a dishwasher according to the preamble of claims 1 and 7, respectively. The term "wash items" used here is to be understood, in particular, as being crockery, glassware, silverware, cooking utensils, baking utensils and serving trays.

A commercial dishwasher configured as a program-operated machine differs from a domestic dishwasher, in particular, in that a commercial dishwasher has to be designed such that - depending on the washing program selected - it is possible to realize program running times between one and five minutes, whereas domestic dishwashers usually have running times of up to 2.5 hours or more. The short program duration required for commercial dishwashers means that technology used in domestic dishwashers usually cannot readily be transferred to commercial dishwashers.

Commercial dishwashers which are configured as program-operated machines usually operate in two main process steps: a first step, which contains washing with a wash liquid, and a second step, which contains final rinsing with heated fresh water and metered rinse aid.

In order for it to be possible to carry out these process steps, a commercial dishwasher configured as a program-operated machine is usually provided with two independent liquid systems, which are completely separate from one another. The one liquid system is a wash-water circuit, which is responsible for washing the wash items, wherein washing is carried out using recirculated water from the wash tank of the dishwasher. The other liquid system is a fresh-water system, which is responsible for final rinsing. The final rinsing is carried out using fresh water, preferably using fresh water from a boiler. After the spraying, the fresh water is likewise collected by the wash tank of the dishwasher.

The main task of the final rinsing is that of removing detergent solution located on the wash items. In addition, the final-rinse water which flows into the wash tank during the final-rinse step serves for regenerating the wash water present in the wash tank.

Before fresh water is sprayed, by the final-rinse operation, as final-rinse liquid and is thus led into the wash tank of the dishwasher, a quantity of wash liquid which is equal to the quantity of fresh water is pumped out of the wash tank.

It is usually the case that commercial dishwashers which are configured as program-operated machines are provided with a number of programs. These programs differ mainly by program running times of different lengths for the washing process. It is possible for the operator to select a short wash program if the wash items are lightly soiled or, if the wash items are heavily soiled to select a correspondingly longer wash program.

Commercial dishwashers which are configured as program-operated machines and for loading batches of wash items into, and unloading the same from, the treatment chamber are available, in particular, in the form of front-loader dishwashers or hood-type dishwashers. In the case of front-loader dishwashers, the crockery wash items are placed in a rack and the rack loaded with wash items is positioned in the treatment chamber of the dishwasher through a front door and, following cleaning, removed through the front door again. In the case of hood-type dishwashers, the crockery racks loaded with wash items are pushed manually into the treatment chamber from an entry side and, after completion of a dishwashing program, removed manually from the treatment chamber from an exit side. Front-loader dishwashers and hood-type dishwashers contain just a single treatment chamber for treating the wash items. The front-loader dishwashers may be under-counter dishwashers or counter-top dishwashers.

Mainly two drying methods are used in commercial dishwashers which are configured as program-operated machines. In the first method, the wash items, still hot following the final-rinse process, are removed from the machine, where they then dry in the ambient air within four to ten minutes. In order for the wash items to dry, in the method described above, they are usually left in the racks in which they have been arranged for cleaning purposes in the dishwasher.

In the second method, air drying takes place within the treatment chamber of the dishwasher. Use is made here of fresh-air drying systems. Such fresh-air drying systems for commercial front-loader or under-counter dishwashers always operate with a high volume flow of air in the region of 25 to 100 m³ per hour, in order for it to be possible for the wash items remaining in the treatment chamber to be dried in a very short period of time. The high volume flows of air are necessitated by the brevity of the drying operation in the commercial sector. In comparison with conventional drying in a domestic dishwasher, the active drying time of a commercial dishwasher is many times shorter. Whereas the drying-program running time in a domestic dishwasher is approximately 30 minutes to 2.5 hours, the drying program running time in the commercial sector is between 1.5 and 5 minutes.

In the case of air drying in a commercial dishwasher configured as a program-operated machine, fresh air is taken in from the outside and led (moved or moves) through the treatment chamber of the dishwasher, in order to take up moisture from the wash items which are to be dried. The moisture-laden drying air is usually then blown out as exhaust air into the area where the dishwasher is set up.

In particular in kitchens in which a number of dishwashers configured as program-operated machines are operated, in some cases, simultaneously, the action of blowing out the drying air into the area where the dishwashers are set up results in the temperature conditions here being adversely affected, since the action of blowing out the moisture-laden drying air, which is warm in comparison with the air in the area where the dishwashers are set up, inevitably increases the moisture content of the air in this area (ambient air). In particular, there is a risk here of the moisture content in the air in the area where the dishwashers are set up being increased to such an extent that steam condenses undesirably in particular on cool boundary surfaces in the area where the dishwashers are set up.

In order to counter this problem, it is known, from the commercial dishwashing sector, for the exhaust air which is to be expelled from the treatment chamber of the dishwasher during the drying phase to be led, in the first instance, through a drying channel, in which at least a part of the moisture contained in the exhaust air is separated off from the exhaust air by condensation before the subsequently cooled exhaust air, with correspondingly reduced moisture content, is then discharged outward via a blowing-out opening of the dishwasher, i.e. it is discharged into the atmosphere of the area where the dishwasher is set up. In specific terms, at least a part of the moisture which is expelled from the treatment chamber together with the exhaust air condenses in the drying channel.

The vastly shortened drying operation which is required for commercial dishwashers in comparison with domestic dishwashers gives rise to the not insignificant risk that - in particular on account of the high volume flow of air which is led through the treatment chamber of the dishwasher during the drying phase - the condensation which collects in the drying channel is also blown out through the blowing-out opening of the dishwasher. There is also a risk of relatively small quantities of wash liquid and final-rinse liquid passing into the drying channel, since the drying channel is usually connected to the interior of the dishwasher. In standby phases and when the machine is first started up each day, or when the machine is being heated up, it is likewise possible for droplets of condensation to form in the drying channel.

Furthermore, in the case of commercial dishwashers configured as program-operated machines, the drying channel is usually not of sufficiently large dimensions in order for the moisture content of the exhaust air which is to be expelled from the treatment chamber of the dishwasher to be reduced to the extent where this exhaust air corresponds to the moisture content of the air (ambient air) in the area where the dishwasher is set up. In the case of conventional dishwashers, the action of blowing out the exhaust air into the area where the dishwasher is set up thus inevitably results in an increase in the moisture in the ambient air, i.e. in the air in the area where the dishwasher is set up.

Accordingly, one problem with the commercial dishwashers which are known from the prior art and are configured as program-operated machines is that of continued undesirable discharge of water from the dishwasher during the drying operation (drying phase), as the dishwasher runs through its program, despite the provision of a drying channel.

A further disadvantage with conventional dishwashers known from the prior art is the relatively high consumption of fresh water and/or final-rinse liquid per dishwashing cycle, this consumption usually being between 2.4 to 3.5 liters. Account should be taken here of the fact that the consumption of chemicals, i.e. detergent and rinse aid, is proportionally dependent on the consumption of fresh water per wash cycle or dishwashing cycle. In the case of a constant fresh water supply temperature, this also applies to the heating energy.

### Summary

Based on the problems explained above, it is an object of the invention to make it possible, in the case of a dishwasher configured as a program-operated machine, on the one hand for the discharge of water to be reduced further during operation, wherein, in particular, it is to be ensured that the dishwasher can also be operated as straightforwardly as possible in the area where it is set up without any high-outlay drying-channel system. It is also the intention to specify a way of making it possible to reduce the fresh water quantity or final-rinse liquid quantity necessary to clean the wash items without hereby impairing the effectiveness of the cleaning of the wash items.

This object is achieved, in respect of the method for operating a dishwasher, by the subject matter of independent patent claim 1 and, in respect of the dishwasher, by the subject matter of independent patent claim 7. Advantageous developments of the method according to the invention are specified in dependent patent claims 2 to 6 and of the dishwasher according to the invention are specified in dependent patent claims 8 to 15.

Therefore, in accordance with one aspect of the present invention, a dishwasher, in particular a commercial dishwasher, which is configured as a program-operated machine and has a treatment chamber, into and from which wash items can be manually inserted and removed, is proposed. The dishwasher according to the invention also has a tank, into which liquid can flow off from the treatment chamber by gravity, a wash system having a wash pump and a wash pipe system for conveying wash liquid out of the tank during a wash phase and for spraying the wash liquid through wash nozzles in the treatment chamber, a fresh water final-rinse system having at least one final-rinse pump and at least one final-rinse pipe system for conveying final-rinse liquid out of a fresh water feed device during a fresh water final-rinse phase and for spraying the final-rinse liquid through final-rinse nozzles in the treatment chamber, and also a steam final-rinse system for generating steam and for leading the steam, via a steam pipe, into the treatment chamber during a steam final-rinse phase.

The dishwasher according to the invention is also provided with a program control device for executing at least one cleaning program, the program control device being configured such that, in a cleaning cycle, first the wash phase, and afterwards the fresh water final-rinse phase and the steam final-rinse phase, are carried out simultaneously, with a time lag, successively, or in a chronologically overlapping manner.

The term "steam" used here is to be understood, in particular, as being gaseous or vaporous steam which is introduced into the treatment chamber of the dishwasher during the steam final-rinse phase, or is fed to the treatment chamber of the dishwasher in some other way, with the aim of removing the remaining wash liquid (detergent solution) located on the wash items following the wash phase.

Equally, the term "final-rinse fluid" used here is to be understood as being any gaseous or vaporous or liquid substance which is sprayed into the treatment chamber of the dishwasher during the final-rinse phase, composed of the fresh water final-rinse phase and the steam final-rinse phase, or is fed to the treatment chamber of the dishwasher in some other way, likewise with the aim of removing the remaining wash liquid (detergent solution) located on the wash items following the wash phase.

The present invention is based on the finding that the steam led into the treatment chamber during the steam final-rinse phase can be used in order to remove remaining wash liquid, in particular detergent solution, from the surfaces of the wash items.

Since, according to the invention, the final-rinse phase is composed of a fresh water final-rinse phase, on the one hand, and a steam final-rinse phase, on the other hand, it is possible to reduce the overall water consumption per cleaning cycle, wherein the amount of energy which has to be used per cleaning cycle and the chemical costs are reduced at the same time.

Tests have shown that steam which condenses on surfaces of wash items gives rise to extremely good rinse-off effects. In accordance with the second law of thermodynamics, the steam which is introduced into the treatment chamber of the dishwasher during the steam final-rinse phase is distributed uniformly in the treatment chamber, and therefore this steam introduced into the treatment chamber reaches, in particular, even any occluded zones of the wash items which may be present, i.e. surfaces of the wash items which cannot be reached directly by a spray jet. In other words, this means that the steam introduced into the treatment chamber of the dishwasher during the steam final-rinse phase reaches every surface of the wash items within the treatment chamber irrespective of the position and of the orientation of the wash item surface, and can be applied essentially in equal parts (uniformly) to the surfaces of the wash items. This advantageous effect cannot be achieved in the case of a final-rinse phase which comprises merely a fresh water final-rinse phase, in which, rather than steam, final-rinse liquid is sprayed into the treatment chamber.

Restrictions to using steam as dishwashing medium are constituted by surfaces of wash items which, on account of their geometrical shape, do not allow gravity-induced flow off, i.e. do not allow liquid to flow off by gravity. These restrictions can occur, for example, in the case of wash items with base depressions, such as in the case of bowls or glasses, when these wash items are positioned correspondingly in the treatment chamber of the dishwasher and the orientation of at least some of the surfaces of the wash items does not allow liquid to flow off by gravity.

The aforementioned restriction means that, as final-rinse phase, a steam final-rinse phase alone is not always sufficient for a good cleaning result. For this reason, according to the present invention, the final-rinse phase used for rinsing off the wash liquid remaining on the surfaces of the wash items following the wash phase is composed of the steam final-rinse phase and of the fresh water final-rinse phase. It has been found that only the combination of a fresh water final-rinse phase and of a steam final-rinse phase gives a thorough cleaning result.

In comparison with a final-rinse phase which is carried out in the case of a conventional dishwasher known from the prior art, the solution according to the invention, in which the fresh water final-rinse phase is used in conjunction with the steam final-rinse phase, makes it possible for the total quantity of fresh water used during the final-rinse phase to be reduced considerably.

The steam which is to be introduced into the treatment chamber of the dishwasher in the steam final-rinse phase is supplied, at least partially, by a steam final-rinse system. According to the invention, for this purpose, the steam final-rinse system has a sorption unit having a reversibly dehydratable dry material.

The term "reversibly dehydratable dry material" used here is understood as being a sorption agent or sorbent which is intended to store moisture during an adsorption phase, wherein at least a part of the moisture stored during the adsorption phase is discharged or released again in a so-called regeneration phase. The dry material is, for example, a sorption agent which has zeolite. Zeolite is a crystalline mineral which contains oxides of silicon and aluminum in the skeleton structure. The regular skeleton structure contains cavities in which water molecules can be adsorbed, with heat being released in the process. Within the skeleton structure, the water molecules are exposed to strong field forces, the strength of which depends on the temperature of the zeolite material and on the quantity of water already contained in the skeleton structure. A suitable dry material here is, in particular, type Y zeolite, since this material is particularly stable even under extreme hydrothermal conditions.

According to the present invention, the reversibly dehydratable dry material of the sorption unit, which belongs to the steam final-rinse system, is used, where necessary, in order to withdraw moisture, during an adsorption phase, from the air volume enclosed by the treatment chamber of the dishwasher. For this purpose, air is led out of the treatment chamber through the sorption unit, having the reversibly dehydratable dry material, such that the dry material can absorb moisture from the air flow. The air is then fed back to the treatment chamber. For this purpose, the steam final-rinse system has a fan which can be activated preferably by a program control device and is intended for the formation, where necessary, of an air circuit in the treatment chamber, such that at least a part of the air is led out of the treatment chamber through the sorption unit and subsequently fed back to the treatment chamber.

Accordingly, during the adsorption phase of the dry material, moisture is withdrawn from the air circulating in the treatment chamber, to be precise by at least a part of the air being guided through the sorption unit. The dry material of the sorption unit here adsorbs moisture from the air, which is integrated in the structure of the dry material. During this adsorption phase, adsorption heat is also released, as a result of which the fraction of air which passes through the sorption unit is heated correspondingly.

In the adsorption phase, the sorption unit, which belongs to the steam final-rinse system, thus performs a double function: first of all, when air is guided out of the treatment chamber of the dishwasher through the sorption unit, at least a part of the moisture present in the air is retained by the dry material, and therefore the air passing through the sorption unit is dried correspondingly. Secondly, the air guided through the sorption unit is heated since the dry material releases heat as it adsorbs moisture. Therefore, the air guided through the sorption unit during the adsorption phase is not only dried; rather, there is a simultaneous increase in the temperature of the air.

Accordingly, the hot air dried following passage through the sorption unit can be guided back into the treatment chamber of the dishwasher and used for drying the wash items. The higher air temperature allows a significant improvement in the drying quality specifically for wash items made of plastics material.

As already explained, the dry material of the sorption unit, which belongs to the steam final-rinse system, is reversibly dehydratable. Accordingly, once moisture has accumulated on the dry material and/or once the dry material has adsorbed moisture, the dry material can be regenerated again, as a result of which at least a part of the previously adsorbed moisture is discharged again from the dry material (desorption). For this purpose, during the so-called desorption phase, the dry material of the sorption unit is heated and air is led out of the treatment chamber of the dishwasher through the sorption unit, which has the heated dry material. For this purpose, the dishwasher according to the invention has a heating device which belongs to the steam final-rinse system and can be activated, preferably by the program control device, for, where necessary, heating the dry material during a desorption phase.

The air flow through the sorption unit having the heated dry material is generated here preferably with the aid of the already mentioned fan, with the aid of which, as early as the adsorption phase, air has been led out of the treatment chamber of the dishwasher through the sorption unit. Of course, it is nevertheless also possible, for this purpose, to use a further (additional) fan.

According to the invention, during the desorption phase, with the aid of the fan, air is led out of the treatment chamber of the dishwasher through the sorption unit having the heated dry material such that moisture is desorbed from the dry material and at least a part of the thermal energy previously introduced into the dry material, and at least a part of the moisture desorbed from the dry material, is discharged as steam from the sorption unit with the aid of the air flow led through the sorption unit. This steam discharged from the sorption unit is led into the treatment chamber of the dishwasher at least partially during the steam final-rinse phase of the dishwasher.

The advantages which can be achieved by the solution according to the invention are obvious: providing a sorption unit having a reversibly dehydratable dry material allows air drying in the treatment chamber of the dishwasher with drying air without the drying air then having to be blown outward into the atmosphere of the area where the dishwasher is set up since, on account of the sorption unit being provided, the drying air can be recirculated continuously in the treatment chamber. According to the invention, the moisture taken up by the drying air during the drying operation is adsorbed by the dry material of the sorption unit by air being led out of the treatment chamber of the dishwasher through the sorption unit having the reversibly dehydratable dry material, and therefore the dry material absorbs moisture from the air flow, after which the dried air is fed back to the treatment chamber. This ensures that the dishwasher can be operated, even without a high-outlay drying-channel system in the area where it is set up, without an undesirable increase in the moisture in the ambient air, i.e. in the air in the area where the dishwasher is set up, having to be expected. Furthermore, the drying quality can be improved significantly, specifically in the case of wash items made of plastics material, since the air which is dried in the sorption unit and guided back in the treatment chamber is correspondingly heated.

Since, on the other hand, at least a part of the moisture which is discharged by the dry material in the desorption phase of the sorption unit is used, according to the solution of the invention, as final-rinse fluid during the steam final-rinse phase, it is possible, in comparison with a final-rinse phase carried out for a conventional dishwasher known from the prior art, for the total quantity of fresh water used during the final-rinse phase to be reduced considerably. Furthermore, according to the present invention, it is no longer imperative, in order to realize the steam final-rinse phase, for example with the aid of a steam generator connected to a fresh water supply pipe, for final-rinse liquid, i.e. fresh water alone or fresh with added rinse aid, to be evaporated, which additionally cuts back on resources required (fresh water and energy). This is attributable, in particular, to the fact that the moisture discharged by the dry material during the desorption phase is utilized directly, in the form of steam, for steam final-rinsing purposes.

In a preferred realization of the method according to the invention, it is provided that, following a standard wash phase, the abovedescribed fresh water final-rinse phase is carried out with a reduced quantity of fresh water of 0.5 to 2.0 litres, and preferably with a reduced quantity of fresh water of 1.0 to 1.7 litres. The steam final-rinse phase takes place after the completion of the fresh water final-rinse phase, in advance of the fresh water final-rinse phase or in a chronologically overlapping manner with the fresh water final-rinse phase and, during this steam final-rinse phase, remaining wash liquid is rinsed off completely from the surfaces of the wash items with the aid of the steam introduced into the treatment chamber of the dishwasher. During this steam final-rinse phase, a total of 20 to 150 g, preferably 30 to 100 g, and still more preferably 40 to 70 g water are fed in the vaporous state to the treatment chamber. The quantities of fresh water specified for this preferred realization of the solution according to the invention always relate to a dishwasher in the form of a program-operated machine of which the treatment chamber is intended for a crockery rack of dimensions 500 mm x 500 mm, and therefore, as seen in the plan view of the treatment chamber, the wall of the treatment chamber encloses a unit surface area of dimensions 500 mm x 500 mm.

In the case of the aforementioned preferred realization of the solution according to the invention, the steam final-rinse phase lasts a total of approximately 5 to 60 seconds and preferably a total of 10 to 30 seconds. The steam final-rinse phase is followed by a condensation and draining phase, which lasts for a defined period of time and in which the steam introduced during the steam final-rinse phase into the treatment chamber of the dishwasher condenses at least partially on the surfaces of the wash items and can drain and flow off by gravity into the wash tank. The aforementioned condensation and draining phase lasts preferably approximately 5 to 60 seconds and more preferably approximately 10 to 20 seconds.

In the case of the aforementioned preferred realization of the method according to the invention, it is possible - in comparison with the cleaning methods which are usually used for dishwashers at present - for approximately 1 litre of fresh water and a corresponding quantity of detergent and rinse aid, and approximately 5 to 200 kJ of energy, to be saved per wash or dishwashing cycle.

In a preferred development of the solution according to the invention, it is provided that completion of the final-rinse phase, including the condensation and draining phase, is followed by a drying phase, during which an air circuit is formed in the treatment chamber of the dishwasher for the drying of wash items accommodated in the treatment chamber. According to the invention, it is provided here that, during the drying phase, at least a part of the air circulating in the treatment chamber is led through the sorption unit having the reversibly dehydratable dry material and is subsequently fed back to the treatment chamber. The adsorption phase of the sorption unit, which belongs to the steam final-rinse system and through which at least a part of the drying air circulating in the treatment chamber is led during the drying phase, is preferably simultaneous or chronologically overlapping with the drying phase. On the other hand, it is advantageous if the desorption phase of the sorption unit is performed before or simultaneously with the final-rinse phase, in particular steam final-rinse phase, of the dishwasher.

### Brief Description of the Drawings

Exemplary embodiments of the solution according to the invention will be explained in more detail hereinbelow with reference to the accompanying drawings, in which:
- Figure 1: shows, schematically, a dishwasher, in particular a commercial dishwasher, in the form of a program-operated machine according to a first embodiment of the invention;
- Figure 2: shows, schematically, a dishwasher, in particular a commercial dishwasher, in the form of a program-operated machine according to a second embodiment of the invention; and
- Figure 3: shows, schematically, a dishwasher, in particular a commercial dishwasher, in the form of a program-operated machine according to a third embodiment of the invention.

### Description

The invention relates to commercial dishwashers, in particular crockery or utensil washers, in the form of a program-operated machine. They contain a program control device 101, for controlling at least one cleaning program, and a treatment chamber 2, which can be closed by a door (not shown) or a hood (not shown) and is located in a machine housing for accommodating wash items which are to be cleaned (not shown), for example crockery, silverware, pots, pans and trays.

The treatment chamber 2 has located beneath it a wash tank 12 for accommodating sprayed liquid from the treatment chamber 2. A wash pump 13 is provided for conveying wash liquid out of the wash tank 12, through a wash liquid pipe system 16, to wash nozzles 11a, 11b, which are directed, in the treatment chamber 2, onto the region of the wash items which are to be cleaned and which spray the wash liquid onto the wash items which are to be cleaned. The sprayed wash liquid returns by gravity into the wash tank 12. The wash tank 12, the wash pump 13, the wash liquid pipe system 16 and the wash nozzles 11, together with the treatment chamber 2, therefore form a wash liquid circuit. The wash liquid pipe system 16 connects the pressure side of the wash pump 13 to the wash nozzles 11a, 11b.

Also provided is a final-rinse system for conveying final-rinse liquid, by means of a final-rinse pump 14, through a final-rinse pipe system 17 to final-rinse nozzles 15a, 15b, which are directed, in the treatment chamber 2, onto the region of the wash items which are to be cleaned. The sprayed final-rinse liquid returns by gravity from the treatment chamber 2 into the wash tank 12. The final-rinse liquid pipe system 17 connects the pressure side of the final-rinse pump 14 to the final-rinse nozzles 15a, 15b.

It is possible for the wash nozzles 11a, 11b and the final-rinse nozzles 15a, 15b to be arranged within the treatment chamber 2 in the regions above and/or beneath and - if desired - also to the sides of the wash item region, and to be directed in each case toward the region in which the wash items are positioned.

It is preferable for a multiplicity of wash nozzles 11a to be provided on at least one upper wash arm, for a multiplicity of wash nozzles 11b to be provided on at least one lower wash arm, for a multiplicity of final-rinse nozzles 15a to be provided on at least one upper final-rinse arm and for a multiplicity of final-rinse nozzles 15b to be provided on at least one lower final-rinse arm.

Before final-rinse liquid is sprayed during the final-rinse phase, in each case a quantity of wash liquid which corresponds to the final-rinse liquid is pumped out of the wash tank 12 by means of a drainage pump 5, of which the suction side is connected, via a discharge pipe 4, to a sump of the wash tank 12.

If the wash tank 12 is empty prior to initial starting of the dishwasher 1 configured as a program-operated machine, it must first be filled with fresh water via a fresh water pipe (not shown) or with fresh water or some other final-rinse liquid or wash liquid by means of the final-rinse system and the final-rinse pump 14 thereof.

The final-rinse liquid may be fresh water or fresh water mixed with rinse aid.

The wash liquid contains detergent, which is added, preferably automatically, to the liquid contained in the wash tank 12 by means of a detergent-metering device (not shown).

The program control device 101 controls the wash pump 13, the final-rinse pump 14, the drainage pump 5 and the detergent-solution pump (not shown) in dependence on the cleaning program selected by an operator in each case using the program control device 101. At least one cleaning program is provided, and preferably a number of optionally selectable cleaning programs are provided.

The dishwasher 1 according to the invention also has a steam final-rinse system, which is intended, where necessary, to generate or supply steam and, during a steam final-rinse phase to lead the generated or supplied steam into the treatment chamber 2 of the dishwasher 1. According to the invention, the steam final-rinse system has a sorption unit 41. This sorption unit 41 is usually a container, in which a reversibly dehydratable dry material has been introduced. This dry material is preferably a sorption agent which has zeolite. A suitable dry material is, in particular, type Y zeolite, since this material is particularly stable even under extreme hydrothermal conditions.

The steam final-rinse system also has a pipe system 43, which is connected, on the one hand, to the treatment chamber 2 of the dishwasher 1 and, on the other hand, to an inlet 41b of the sorption unit 41, or can be connected thereto for example via a valve, as well as a pipe system 42 which is connected, or can be connected correspondingly, on the one hand, to an outlet 41a of the sorption unit 41 and, on the other hand, to the treatment chamber 2 of the dishwasher 1. Via these pipe systems 42, 43, it is possible, with the aid of a fan 44 assigned to the steam final-rinse system, to form an air circuit if required, so that at least a part of the air is taken in from the treatment chamber 2 and fed to the sorption unit 41 via the pipe system 42. This air taken in out of the treatment chamber 2 is then led through the sorption unit 41 and the dry material of the sorption unit, after which it is fed back to the treatment chamber 2 via the outlet 41a of the sorption unit 41 and the pipe system 42.

This makes it possible for moisture to be withdrawn from the air removed from the treatment chamber 2 of the dishwasher 1 since, as flow takes place through the sorption unit 41, the dry material adsorbs moisture from the air, which is integrated in the structure of the dry material. During this so-called adsorption phase, in which moisture from the air removed from the treatment chamber 2 is adsorbed by the dry material of the sorption unit 41, adsorption heat is also released, as a result of which the air which has been led through the sorption unit 41 is heated correspondingly. Therefore, the sorption unit 41, when operated in its adsorption phase, performs a double function: first of all, when air is guided out of the treatment chamber 2 of the dishwasher 1 through the sorption unit 41, at least a part of the moisture present in the air (steam) is retained by the dry material of the sorption unit 41, and therefore the air passing through the sorption unit 41 is dried correspondingly. Secondly, the air guided through the sorption unit 41 is heated when the sorption unit 41 is located in its adsorption phase since the dry material of the sorption unit 41 releases heat as it adsorbs moisture. Therefore, the air from the treatment chamber 2 which is guided through the sorption unit 41 located during its adsorption phase is not only dried; rather, there is a simultaneous increase in the temperature of the air.

The hot air dried following passage through the sorption unit 41 is guided back into the treatment chamber 2 of the dishwasher 1 and can be used for drying the wash items accommodated in the treatment chamber 2. To this extent, it is preferred if the adsorption phase of the sorption unit 41 takes place during a drying phase of the dishwasher 1, in order for it to be possible for the heat which is released by the dry material of the sorption unit 41 as it adsorbs moisture to be used for drying the wash items. The higher air temperature here allows a significant improvement in the drying quality specifically for wash items made of plastics material. In particular, it is thus also possible for the drying time to be reduced, in some cases, significantly. This is an essential factor in particular for commercial dishwashing.

The term "adsorption phase" used here is to be understood as being a state of the sorption unit 41 in which air is led out of the treatment chamber 2 through the reversibly dehydratable dry material of said sorption unit 41 such that the dry material absorbs moisture from the air flow, after which the dried and heated air is fed back to the treatment chamber 2 of the dishwasher 1. On the other hand, the term "desorption phase" here is to be understood as being a state in which the sorption unit 41 exists when the dry material of said sorption unit 41 is heated and air is led out of the treatment chamber 2 through the sorption unit 41 having the heated dry material such that moisture is desorbed from the dry material and at least a part of the thermal energy previously introduced into the dry material, and at least a part of the moisture desorbed from the dry material, is discharged from the sorption unit 41 with the aid of the air flow led through the sorption unit 41.

In order for it to be possible to regenerate the dry material of the sorption unit 41 during the desorption phase, it is necessary - as already explained - to heat the dry material correspondingly. For this purpose, in the case of those embodiments of the dishwasher 1 according to the invention which are illustrated in the drawings, the sorption unit 41 is assigned a for example electrically operated heating device 45 which is intended to heat, where necessary, the dry material of the sorption unit 41 during a desorption phase or directly before the desorption phase is initiated. The desorption sub-process is carried out following the adsorption phase, to be precise by the sorption unit 41 being fed heat, for example in the form of electrical energy, steam, gas or hot water. Simultaneously or with a time lag, through the sorption unit 41 located in the desorption phase, air is blown out of the treatment chamber 2 of the dishwasher 1, via the pipe system 43, with the aid of the fan 44, which is assigned to the steam final-rinse system, and this air takes up the water desorbed as steam from the dry material. As it passes through the sorption unit 41 located in the desorption phase, the air from the treatment chamber 2 of the dishwasher 1 takes up at least a part of the moisture desorbed from the dry material in the form of steam and a part of the thermal energy previously introduced into the dry material. The air is then fed back to the treatment chamber 2 of the dishwasher 1 via the pipe system 42.

According to the invention, the moisture desorbed from the dry material during the desorption phase is fed to the treatment chamber 2 of the dishwasher 1 for steam final-rinsing purposes.

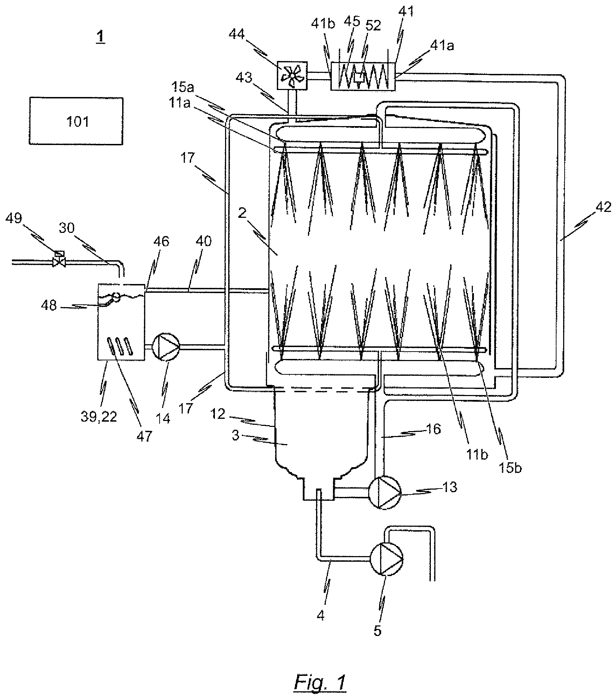

In the case of that embodiment of the dishwasher 1 according to the invention which is illustrated in Figure 1, the final-rinse pump 14 has its suction side connected to an outlet of a boiler 22. The boiler 22 also has an inlet, which is connected to a fresh water supply pipe 30 and via which the boiler 22 is fed either fresh water or fresh water with added rinse aid. In the boiler 22, the liquid (fresh water alone or fresh water with added rinse aid) fed via the inlet is heated up in accordance with a specific process sequence. Via the final-rinse pump 14, which has its suction side connected to the boiler exit, the final-rinse liquid heated up in the boiler 22 can be fed to the final-rinse nozzles 15a and 15b, via the final-rinse pipe system 17, for example during a fresh water final-rinse phase. The final-rinse nozzles 15a and 15b are arranged in the treatment chamber 2, in order for the final-rinse liquid heated up in the boiler 22 to be sprayed onto the wash items in the treatment chamber 2. Of course, it is also conceivable for the boiler 22 to be fed, via the inlet and the fresh water supply pipe 30, fresh water alone, which, following heating in the boiler 22, has a rinse aid added to it.

In the case of that embodiment of the dishwasher 1 according to the invention which is illustrated in Figure 1, the steam final-rinse system, in addition to the sorption unit 41, has a preferably electrically operated steam generator 39 which - as illustrated in Figure 1 - may be integrated, for example, in the boiler 22. In this case, a corresponding steam outlet 46 of the steam generator 39 is formed in the upper region of the boiler 22. The steam outlet 46 of the steam generator 39 is connected to the treatment chamber 2, via a steam pipe 40, at a location situated above the wash tank 12, in order for steam generated in the steam generator 39 to be introduced into said treatment chamber where necessary. The outlet opening of the steam pipe 40 is preferably located between the upper nozzles 11a, 15a of the wash system and fresh water final-rinse system, respectively, and the lower nozzles 11b, 15b. Of course, other positions are nevertheless also possible.

The boiler 22, which, according to the embodiment illustrated in Figure 1, serves for generating steam, where necessary, in addition to heating the final-rinse liquid, contains a heater 47. It is also possible for the boiler 22 to have arranged in or on it a level sensor 48, which controls, for example, a valve 49 of the fresh water pipe 30.

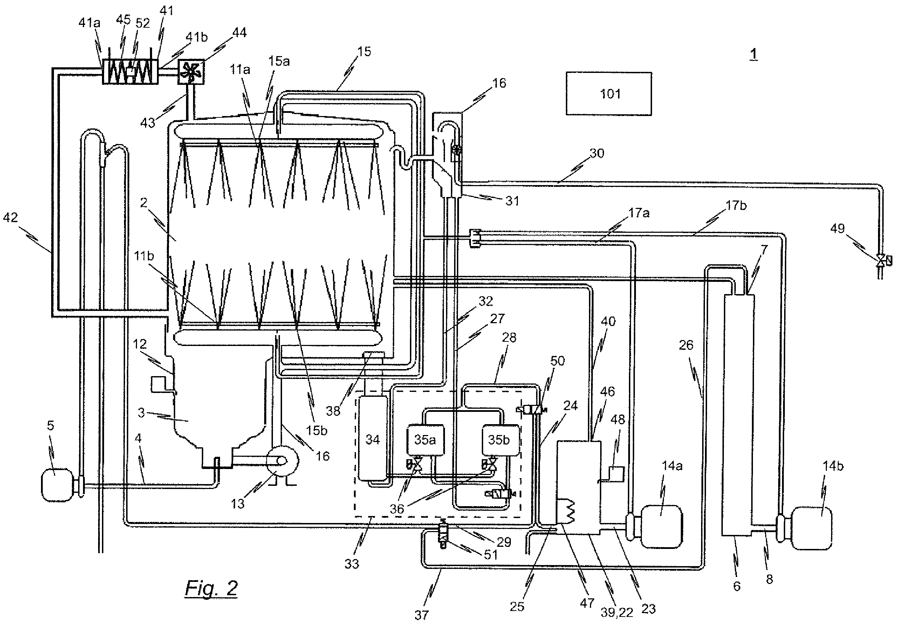

In the case of that embodiment of the dishwasher 1 according to the invention which is illustrated in Figure 2, a first final-rinse pump 14a has its suction side connected to an outlet 23 of a boiler 22. The boiler 22 also has an inlet 25, which is connected to a fresh water supply pipe 24 and via which the boiler 22 is fed either fresh water or fresh water with added rinse aid. In the boiler 22, the liquid (fresh water alone or fresh water with added rinse aid) fed via the inlet 25 is heated up in accordance with a specific process sequence. Via the first final-rinse pump 14a, which has its suction side connected to the boiler exit 23, the final-rinse liquid heated up in the boiler 22 can be fed to the final-rinse nozzles 15a and 15b, via a final-rinse pipe system 17, 17a, for example during a fresh water final-rinse phase. The final-rinse nozzles 15a and 15b are arranged in the treatment chamber 2, in order for the final-rinse liquid heated up in the boiler 22 to be sprayed onto the wash items in the treatment chamber 2. Of course, it also conceivable for the boiler 22 to be fed, via the inlet 25 and the fresh water supply pipe 24, fresh water alone, which, following heating in the boiler 22, has a rinse aid added to it.

In the case of that embodiment of the dishwasher 1 according to the invention which is illustrated in Figure 2, a second final-rinse pump 14b is also provided, this pump having its suction side connected to a fresh water container 6 and having its pressure side connected to a final-rinse pipe system 17a, 17b. The final-rinse pipe system 17b, which extends from the pressure side of the second final-rinse pump 14b, and the final-rinse pipe system 17a, which extends from the pressure side of the first final-rinse pump 14a, merge into a common final-rinse pipe system 17. The second final-rinse pump 14b, which is connected to the fresh water container 6, can be used to convey unheated final-rinse liquid to the final-rinse nozzles 15a, 15b arranged in the treatment chamber 2, in order, where necessary, for unheated final-rinse liquid to be sprayed onto the wash items.

The fresh water container 6 has an inlet 7, which is connected to a fresh water supply pipe 26. Via this fresh water supply pipe 26, the fresh water container 6 is fed either fresh water alone or fresh water with added rinse aid. Of course, it is nevertheless also conceivable for a metering device for adding rinse aid (this device not being illustrated in Figure 2) to be arranged downstream of the outlet 8 of the fresh water container 6.

In the case of that embodiment of the dishwasher 1 according to the invention which is illustrated in Figure 2, both the boiler 22 and the fresh water container 6 are connected to a return-prevention means 16 via fresh water supply pipes 24, 26, 27, 28 and 29. The return-prevention means 16 serves to prevent fresh water from being sucked back into a fresh water supply pipe 30 from the suction side of the first final-rinse pump 14a and/or the suction side of the second final-rinse pump 14b.

The return-prevention means 9 has as outlet 31, which is connected to a water-softening device 33 via fresh water supply pipes 27 and 32. The water-softening device 33 has, on the one hand, a salt container 34, which is connected to the fresh water supply pipe 32, and, on the other hand, first and second water softeners 35a, 35b which are arranged parallel to one another. The two water softeners 35a, 35b, which are arranged parallel to one another, are connected to the outlet 31 of the return-prevention means 16 via a corresponding fresh water pipe system and the fresh water supply pipe 27. The water softeners 35a, 35b of the water-softening device 33 can be operated alternately, by suitable activation of valves 36, in order to soften the fresh water fed to the boiler 22 via the fresh water supply pipes 28 and 24 and the fresh water fed to the fresh water container 6 via the fresh water supply pipes 28, 24 and 37.

The salt container 34, which belongs to the water-softening device 33, contains a suitable salt or a suitable chemical by means of which, where necessary, a water-softening agent added via the water softeners 35a, 35b, or a dissociation product resulting from a water-softening agent being added, can be suitably regenerated. The salt container 34 can be refilled with the salt or the chemical from the treatment chamber 2 of the dishwasher 1 via an opening which can be closed by a cover 38.

In the case of that embodiment of the dishwasher 1 according to the invention which is illustrated in Figure 2, it is optionally possible, by the provision of the fresh water container 6 and of the second final-rinse pump 14b, also for non-heated final-rinse liquid to be fed to the final-rinse nozzles 15a, 15b via the final-rinse pipe system 17a and 17b. Accordingly, it is possible, by suitable activation for example of the final-rinse pumps 14a, 14b and/or by suitable activation for example of the valves 49, 50, 51 arranged in the fresh water supply pipes to the fresh water container 6 and the boiler 22, to feed the treatment chamber 2 final-rinse liquid which has or has not been heated.

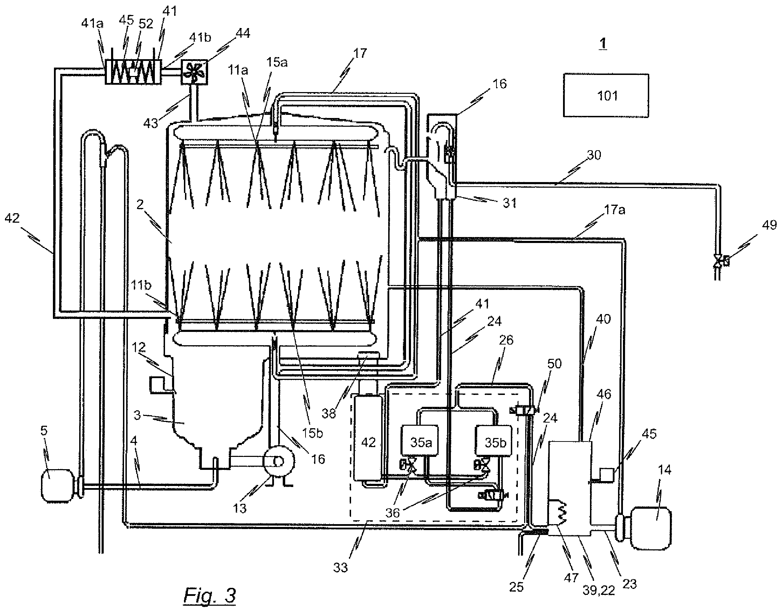

Figure 3 shows, schematically, a dishwasher 1, in particular a commercial dishwasher, in the form of a program-operated machine according to a third embodiment of the present invention. In contrast to the second embodiment, which is illustrated in Figure 2, the dishwasher 1 which is illustrated in Figure 3 does not have a fresh water container or, therefore, a second final-rinse pump, via which - as illustrated in Figure 2 - unheated final-rinse liquid can be fed to the final-rinse nozzles via a final-rinse pipe system. Otherwise, the dishwasher 1 which is illustrated in Figure 3 is structurally and functionally identical to the dishwasher described previously with reference to Figure 2 or Figure 1.

All the embodiments which are illustrated in the drawings additionally have a program control device 101. This program control device 101 serves for executing at least one cleaning program, the program control device 101 being connected to the activatable components of the dishwasher 1, for example to the valves 49, 50, 51, to the wash pump 13, to the final-rinse pump 12 (cf. Figures 1 and 3) or the final-rinse pumps 14a, 14b (cf. Figure 2), to the fan 44, to the heating device 45, and/or to a heater-control circuit for controlling the heater 47, in order to realize a cleaning method (cleaning cycle) having the following steps (phases), which shall be executed consecutively:
(1) a wash phase, during which wash liquid is sprayed from the wash tank 12 with the aid of the wash pump 13 via the wash pipe system 16 through the wash nozzles 11a, 11b into the treatment chamber 2, wherein at least a part of the sprayed wash liquid flows back from the treatment chamber 2 by gravity into the wash tank 12;
(2) a fresh water final-rinse phase, during which heated or unheated fresh water or fresh water with added rinse aid is sprayed as final-rinse liquid, by means of the final-rinse pump 14, 14a or 14b into the treatment chamber and can then flow from the treatment chamber by gravity into the wash tank 12; and
(3) a steam final-rinse phase, during which at least a part of the steam released from the sorption unit 41 of the steam final-rinse system during a desorption phase is introduced into the treatment chamber 2 via the pipe system 43, which is formed separately from the wash pipe system 16 and separately from the final-rinse pipe system 17.

Should it not be possible, during the steam final-rinse phase, for a sufficient quantity of steam to be supplied from the sorption unit 41, it is possible, according to the exemplary embodiments illustrated in the drawings, for the steam necessary for the steam final-rinse phase, or at least a part of the steam necessary for the steam final-rinse phase, to be generated in the steam generators 39, this steam then being introduced into the treatment chamber 2 via the steam pipe 40.

The steam final-rinse phase begins in advance of, or preferably after, the fresh water final-rinse phase. As an alternative to this, however, it is also conceivable for the steam final-rinse phase and the fresh water final-rinse phase to overlap chronologically at least partially.

The program control device 101 is preferably also configured such that the steam final-rinse phase is followed for a certain period of time, in a program-controlled manner, by a condensation and draining phase, during which the steam introduced into the treatment chamber 2 during the steam final-rinse phase can condense and drain out of the treatment chamber 2 at least partially into the wash tank 12 before the end of the program has been reached.

In addition, it is advantageous if the program control device 101 is configured such that completion of the final-rinse phase, including the condensation and draining phase, is followed for a certain period of time, in a program-controlled manner, by a drying phase, during which an air circuit is formed in the treatment chamber 2 for the drying of wash items accommodated in the treatment chamber 2. In a preferred realization of the solution according to the invention, at least a part of the drying air circulating in the treatment chamber 2 is led, during this drying phase, through the sorption unit 41 having the reversibly dehydratable dry material and is subsequently fed back to the treatment chamber 2. The program control device 101 here is configured such that the adsorption phase of the sorption unit 41 is simultaneous or chronologically overlapping with the drying phase.

On the other hand, it is advantageous if the desorption phase of the sorption unit 41 is performed directly before or simultaneously with the final-rinse phase, in particular steam final-rinse phase.

In the case of those embodiments of the dishwasher 1 according to the invention which are illustrated schematically in the drawings, the sorption unit 41 is assigned a sensor device 52, which serves to determine the moisture-absorption capacity of the dry material of the sorption unit 41 and/or to detect the total moisture quantity adsorbed by the dry material of the sorption unit 41. It is conceivable here for the moisture-absorption capacity and/or the total moisture quantity adsorbed to be detected via the weight of the dry material, via the duration of the adsorption phase and/or via the moisture content of the air at the outlet 41b of the sorption unit 41.

It is conceivable in this context, for example, for the program control device 101 to be designed to preferably selectively automatically connect an additional steam generator, for example the steam generator 39, during the steam final-rinse phase if the moisture quantity detected with the sensor device 52 at the start of the steam final-rinse phase and adsorbed by the dry material is less than a previously defined or definable lower threshold value.

On the other hand, it is conceivable for the program control device 101 to be designed to terminate the steam final-rinse phase automatically as soon as a previously defined or definable quantity of moisture has been desorbed from the dry material of the sorption unit 41.

The invention, rather than being limited to the embodiments illustrated in the drawings, can be gathered by taking an overview of all the features disclosed herein.

## Claims

1. A method for operating a dishwasher (1) configured as a program-operated machine, which dishwasher has a treatment chamber (2) for receiving wash items to be cleaned, wherein the method has the following method steps:
i) during an adsorption phase, air is led out of the treatment chamber (2) through a sorption unit (41) having a reversibly dehydratable dry material such that the dry material absorbs moisture from the air flow, after which the air is fed back to the treatment chamber (2); and
ii) during a desorption phase, the dry material of the sorption unit (41) is heated and air is led out of the treatment chamber (2) through the sorption unit (41) having the heated dry material such that moisture is desorbed from the dry material and at least a part of the thermal energy previously introduced into the dry material, and at least a part of the moisture desorbed from the dry material, is discharged as steam from the sorption unit (41) with the aid of the air flow led through the sorption unit (41),
wherein at least a part of the steam discharged from the sorption unit (41) in method step ii) is led into the treatment chamber (2),
wherein the method further has the following, preferably program-controlled method steps, which shall be executed consecutively:
a) during a wash phase, wash liquid is sprayed from a tank (12) with the aid of a wash pump (13) via a wash pipe system (16) through wash nozzles (11a, 11b) into the treatment chamber (2), wherein at least a part of the sprayed wash liquid flows back from the treatment chamber (2) by gravity into the tank (12); and
b) during a final-rinse phase, final-rinse fluid is led into the treatment chamber (2),
wherein the final-rinse phase is composed of a fresh water final-rinse phase, in which a final-rinse liquid is sprayed through a final-rinse pipe system (17, 17a, 17b) into the treatment chamber (2) and at least a part of the sprayed final-rinse liquid flows back from the treatment chamber (2) by gravity into the tank (12),
**characterized by**
a steam final-rinse phase, in which at least a part of the steam discharged from the sorption unit (41) in method step ii) is led into the treatment chamber (2),
wherein the steam final-rinse phase begins after the completion of the fresh water final-rinse phase, or is performed in advance of the fresh-water final-rinse phase, or wherein the steam final-rinse phase and the fresh water final-rinse phase chronologically overlap at least partially.

2. The method as claimed in claim 1,
wherein in method step ii) the dry material of the sorption unit (41) is heated by a supply of thermal energy, and wherein, with a time lag, or simultaneously with the thermal energy supply, the air is led out of the treatment chamber (2) through the sorption unit (41).

3. The method as claimed in one of claims 1 or 2,
wherein the steam final-rinse phase occupies a period of 5 to 60 seconds and preferably a period of 10 to 30 seconds, and/or
wherein, during the steam final-rinse phase, a total of 20 to 150 g, preferably 30 to 100 g, and still more preferably 40 to 70 g water is fed in the vaporous state to the treatment chamber (2).

4. The method as claimed in one of claims1 to 3,
wherein the method further has the following, preferably program-controlled method steps:
c) during a condensation and draining phase, which takes place after the completion of the steam final-rinse phase, the steam introduced during the steam final-rinse phase into the treatment chamber (2) condensates at least partially and the thereby formed condensate flows off by gravity at least partially out of the treatment chamber (2).

5. The method as claimed in claim 4,
wherein the method further has the following, preferably optional method step:
d) during a drying phase, which takes place after the completion of the condensation and draining phase, an air circuit is formed in the treatment chamber (2) for the drying of wash items accommodated in the treatment chamber (2),
wherein at least a part of the drying air circulating in the treatment chamber (2) is led through the sorption unit (41) having the reversibly dehydratable dry material and is subsequently fed back to the treatment chamber (2).

6. The method as claimed in claim 5,
wherein method step i) is simultaneous or chronologically overlapping with the drying phase, and
wherein method step ii) is performed directly before or simultaneously with the final-rinse phase, in particular steam final-rinse phase.

7. A dishwasher (1), in particular a commercial dishwasher (1), which is configured as a program-operated machine and has the following:
- a treatment chamber (2), into and from which wash items can be manually inserted and removed;
- a tank (12), into which liquid can flow off from the treatment chamber (2) by gravity;
- a wash system having a wash pump (13) and a wash pipe system (16) for conveying wash liquid out of the tank (12) during a wash phase and for spraying the wash liquid through wash nozzles (11a, 11b) in the treatment chamber (2);
- a fresh water final-rinse system having at least one final-rinse pump (14; 14a, 14b) and at least one final-rinse pipe system (17, 17a, 17b) for conveying final-rinse liquid out of a fresh water feed device during a fresh water final-rinse phase and for spraying the final-rinse liquid through final-rinse nozzles (15a, 15b) in the treatment chamber (2);
and
- a program control device (101) for executing at least one cleaning program, the program control device (101) being configured such that, in a cleaning cycle, first the wash phase, and afterwards the fresh water final-rinse phase are carried out,
**characterized by**
- a steam final-rinse system for generating steam and for leading the steam into the treatment chamber (2) during a steam final-rinse phase;
wherein the steam final-rinse system has a sorption unit (41), having a reversibly dehydratable dry material, a fan (44) for the formation, where necessary, of an air circuit, such that at least a part of the air is led out of the treatment chamber (2) through the sorption unit (41) and subsequently fed back to the treatment chamber (2), and a heating device (45), for, where necessary, heating the dry material during a desorption phase of the sorption unit (41), and
wherein the program control device (101) is designed to, during the steam final-rinse phase, initiate the desorption phase of the sorption unit (41), to be precise by activation of the heating device (45) and feeding of thermal energy to the dry material, and by switching on of the fan (44) such that air is led out of the treatment chamber (2) through the sorption unit (41) having the heated dry material, so that moisture is desorbed from the dry material and at least a part of the thermal energy previously introduced into the dry material, as well as at least a part of the moisture desorbed from the dry material, with the aid of the air flow led through the sorption unit (41), is discharged as steam from the sorption unit (41) and introduced into the treatment chamber (2).

8. The dishwasher (1) as claimed in claim 7,
wherein the heating device (45) assigned to the sorption unit (41) is designed to, during the desorption phase, through the supply of electrical energy and or heat, heat the dry material of the sorption unit (41) such that moisture previously absorbed by the dry material is at least partially released again by the dry material,
wherein the dry material has zeolite, in particular type Y zeolite.

9. The dishwasher (1) as claimed in one of claims7 or 8,
wherein the program control device (101) is designed to, during a drying phase, initiate an adsorption phase of the sorption unit (41), to be precise by switching on of the fan (44) such that air is led out of the treatment chamber (2) through the sorption unit (41), so that the dry material of the sorption unit (41) absorbs moisture from the air flow, after which the air is fed back to the treatment chamber (2).

10. The dishwasher (1) as claimed in one of claims 7 to 9,
wherein the fresh water feed device has a fresh water container (6), which is connected or connectable to a fresh water supply pipe (30) and the outlet of which is connected to the suction side of the at least one final-rinse pump (14; 14a, 14b).

11. The dishwasher (1) as claimed in one of claims 7 to 10,
wherein the fresh water feed device has a boiler (22) connected to a fresh water supply pipe (30), for, where necessary, warming the final-rinse liquid to be pumped into the treatment chamber (2) during the fresh water final-rinse phase, the outlet of the boiler being connected to the suction side of the at least one final-rinse pump (14; 14a, 14b).

12. The dishwasher (1) as claimed in one of claims7 to 11,
wherein the steam final-rinse system further has a steam generator (39), connected or connectable to a fresh water supply pipe (30), for, where necessary, generating additional steam during the steam final-rinse phase, the steam generator (39) being connected by a steam pipe (40) to the treatment chamber (2) in order to introduce the, where necessary, additionally generated steam into the treatment chamber (2),
wherein the steam pipe (40) is connected to the treatment chamber (2) at a location situated higher than the tank (12).

13. The dishwasher (1) as claimed in claim 11 in combination with claim12,
wherein the steam generator (39) is integrated in the boiler (22).

14. The dishwasher (1) as claimed in one of claims12 or 13,
wherein a sensor device (52) is also provided, for detecting the total moisture quantity absorbed by the dry material of the sorption unit (41), the program control device (101) being designed to preferably selectively automatically connect the steam generator (39) during the steam final-rinse phase if the moisture quantity detected with the sensor device (52) at the start of the steam final-rinse phase and absorbed by the dry material is less than a previously defined or definable lower threshold value.

15. The dishwasher (1) as claimed in one of claims7 to 14,
wherein a sensor device (52) is also provided, for detecting the total moisture quantity absorbed by the dry material of the sorption unit (41), the program control device (101) being designed to terminate the steam final-rinse phase as soon as a previously defined or definable quantity of moisture has been desorbed from the dry material.

## Patentansprüche

1. Verfahren zum Betreiben eines Geschirrspülers (1), der als eine programmbetriebene Maschine konfiguriert ist, wobei der Geschirrspüler eine Behandlungskammer (2) zum Aufnehmen von zu reinigenden Waschobjekten besitzt, wobei das Verfahren die folgenden Verfahrensschritte besitzt:
i) während einer Adsorptionsphase wird Luft aus der Behandlungskammer (2) durch eine Sorptionseinheit (41) mit einem reversibel dehydrierbaren Trockengut derart entlassen, dass das Trockengut Feuchtigkeit von dem Luftstrom absorbiert, woraufhin die Luft zurück in die Behandlungskammer (2) eingespeist wird; und
ii) während einer Desorptionsphase wird das Trockengut der Sorptionseinheit (41) erwärmt und Luft wird aus der Behandlungskammer (2) durch die Sorptionseinheit (41) mit dem erwärmten Trockengut derart entlassen, dass Feuchtigkeit von dem Trockengut desorbiert wird, und zumindest ein Teil der vorher in das Trockengut eingeführten Wärmeenergie und zumindest ein Teil der von dem Trockengut desorbierten Feuchtigkeit werden von der Sorptionseinheit (41) mit Hilfe des durch die Sorptionseinheit (41) geführten Luftstroms als Dampf ausgestoßen,
wobei zumindest ein Teil des von der Sorptionseinheit (41) ausgestoßenen Dampfes im Verfahrensschritt (ii) in die Behandlungskammer (2) geführt wird,
wobei das Verfahren ferner die folgenden vorzugsweise programmgesteuerten Verfahrensschritte besitzt, die nacheinander ausgeführt werden sollen:
a) während einer Waschphase wird Waschflüssigkeit von einem Tank (12) mit der Hilfe einer Waschpumpe (13) über ein Waschleitungssystem (16) durch Waschdüsen (11a, 11b) in die Behandlungskammer (2) gesprüht, wobei zumindest ein Teil der gesprühten Waschflüssigkeit von der Behandlungskammer (2) durch Schwerkraft in den Tank (12) zurückfließt; und
b) während einer Abschlussspülphase wird Abschlussspülfluid in die Behandlungskammer (2) geführt,
wobei die Abschlussspülphase aus einer Frischwasserabschlussspülphase, in der eine Abschlussspülflüssigkeit durch ein Abschlussspülleitungssystem (17, 17a, 17b) in die Behandlungskammer (2) gesprüht wird und zumindest ein Teil der gesprühten Abschlussspülflüssigkeit von der Behandlungskammer (2) durch Schwerkraft zurück in den Tank (12) fließt,
**gekennzeichnet durch**
eine Dampfabschlussspülphase, in der zumindest ein Teil des von der Sorptionseinheit (41) im Verfahrensschritt ii) ausgestoßenen Dampfes in die Behandlungskammer (2) geführt wird,
wobei die Dampfabschlussspülphase nach dem Abschluss der Frischwasserabschlussspülphase beginnt oder im Voraus vor der Frischwasserabschlussspülphase ausgeführt wird oder wobei sich die Dampfabschlussspülphase und die Frischwasserabschlussspülphase zumindest teilweise zeitlich überlappen.

2. Verfahren nach Anspruch 1,
wobei im Verfahrensschritt ii) das Trockengut der Sorptionseinheit (41) durch eine Zufuhr von Wärmeenergie erwärmt wird und wobei mit einer Zeitverzögerung oder gleichzeitig mit der Zufuhr der Wärmeenergie die Luft aus der Behandlungskammer (2) durch die Sorptionseinheit (41) entlassen wird.

3. Verfahren nach einem der Ansprüche 1 oder 2,
wobei die Dampfabschlussspülphase eine Dauer von 5 bis 60 Sekunden und vorzugsweise eine Dauer von 10 bis 30 Sekunden in Anspruch nimmt und/oder
wobei während der Dampfabschlussspülphase eine Gesamtheit von 20 bis 150 g, vorzugsweise 30 bis 100 g und noch stärker bevorzugt 40 bis 70 g Wasser im dampfförmigen Zustand in die Behandlungskammer (2) eingespeist wird.

4. Verfahren nach einem der Ansprüche 1 bis 3,
wobei das Verfahren ferner die folgenden vorzugsweise programmgesteuerten Verfahrensschritte besitzt:
c) während einer Kondensations- und Entwässerungsphase, die nach dem Abschluss der Dampfabschlussspülphase stattfindet, kondensiert der während der Dampfabschlussspülphase in die Behandlungskammer (2) eingeführte Dampf zumindest teilweise und das dadurch gebildete Kondensat strömt durch Schwerkraft zumindest teilweise aus der Behandlungskammer (2) heraus.

5. Verfahren nach Anspruch 4,
wobei das Verfahren ferner die folgenden vorzugsweise optionalen Verfahrensschritte besitzt:
d) während einer Trocknungsphase, die nach dem Abschluss der Kondensations- und Entwässerungsphase stattfindet, wird ein Luftkreislauf in der Behandlungskammer (2) gebildet, um in der Behandlungskammer (2) aufgenommene Waschobjekte zu trocknen,
wobei zumindest ein Teil der Trocknungsluft, die in der Behandlungskammer (2) zirkuliert, durch die Sorptionseinheit (41) mit dem reversibel dehydrierbaren Trockengut geführt wird und anschließend zurück in die Behandlungskammer (2) eingespeist wird.

6. Verfahren nach Anspruch 5,
wobei der Verfahrensschritt i) gleichzeitig oder zeitlich überlappend mit der Trocknungsphase ist und
wobei der Verfahrensschritt ii) unmittelbar vor oder gleichzeitig mit der Abschlussspülphase insbesondere der Dampfabschlussspülphase ausgeführt wird.

7. Geschirrspüler (1), insbesondere ein kommerzieller Geschirrspüler (1), der als eine programmbetriebene Maschine konfiguriert ist und Folgendes umfasst:
- eine Behandlungskammer (2), in die Waschobjekte manuell eingeführt und aus der diese manuell entfernt werden können;
- einen Tank (12), in den Flüssigkeit von der Behandlungskammer (2) durch Schwerkraft herausfließen kann;
- ein Waschsystem mit einer Waschpumpe (13) und einem Waschleitungssystem (16), um Waschflüssigkeit während einer Waschphase aus dem Tank (12) zu befördern und um die Waschflüssigkeit durch Waschdüsen (11a, 11b) in die Behandlungskammer (2) zu sprühen;
- ein Frischwasserabschlussspülsystem mit mindestens einer Abschlussspülpumpe (14; 14a, 14b) und mindestens einem Abschlussspülleitungssystem (17, 17a, 17b), um eine Abschlussspülflüssigkeit aus einer Frischwasserzuführvorrichtung während einer Frischwasserabschlussspülphase zu befördern und um die Abschlussspülflüssigkeit durch Abschlussspüldüsen (15a, 15b) in die Behandlungskammer (2) zu sprühen;
und
- eine Programmsteuervorrichtung (101), um mindestens ein Reinigungsprogramm auszuführen, wobei die Programmsteuervorrichtung (101) derart konfiguriert ist, dass in einem Reinigungszyklus zuerst die Waschphase und danach die Frischwasserabschlussspülphase ausgeführt wird, **gekennzeichnet durch**
- ein Dampfabschlussspülsystem, um Dampf zu erzeugen und um den Dampf während einer Dampfabschlussspülphase in die Behandlungskammer (2) zu führen;
wobei das Dampfabschlussspülsystem eine Sorptionseinheit (41) mit einem reversibel dehydrierbaren Trockengut, ein Gebläse (44) gegebenenfalls für die Erzeugung eines Luftkreislaufs, derart, dass zumindest ein Teil der Luft aus der Behandlungskammer (2) durch die Sorptionseinheit (41) herausgeführt wird und anschließend zurück in die Behandlungskammer (2) eingespeist wird, und eine Heizvorrichtung (45), um gegebenenfalls das Trockengut während einer Desorptionsphase der Sorptionseinheit (41) zu erwärmen, besitzt und
wobei die Programmsteuervorrichtung (101) ausgelegt ist, während der Dampfabschlussspülphase die Desorptionsphase der Sorptionseinheit (41) einzuleiten, um genau zu sein, durch Aktivierung der Heizvorrichtung (45) und Einspeisen von Wärmeenergie zu dem Trockengut und durch Einschalten des Gebläses (44) derart, dass Luft aus der Behandlungskammer (2) durch die Sorptionseinheit (41) mit dem erwärmten Trockengut herausgeführt wird, so dass Feuchtigkeit aus dem Trockengut desorbiert wird und zumindest sowohl ein Teil der vorher in das Trockengut eingeführten Wärmeenergie als auch zumindest ein Teil der aus dem Trockengut desorbierten Feuchtigkeit mit Hilfe des Luftstroms, der durch die Sorptionseinheit (41) geführt wird, als Dampf von der Sorptionseinheit (41) ausgestoßen wird und in die Behandlungskammer (2) eingeführt wird.

8. Geschirrspüler (1) nach Anspruch 7,
wobei die Heizvorrichtung (45), die der Sorptionseinheit (41) zugewiesen ist, ausgelegt ist, während der Desorptionsphase durch die Zufuhr von elektrischer Energie und/oder Wärme, das Trockengut der Sorptionseinheit (41) derart zu erwärmen, dass die vorher durch das Trockengut absorbierte Feuchtigkeit zumindest teilweise durch das Trockengut wieder freigegeben wird,
wobei das Trockengut Zeolith, insbesondere Typ-Y-Zeolith besitzt.

9. Geschirrspüler (1) nach einem der Ansprüche 7 oder 8,
wobei die Programmsteuervorrichtung (101) ausgelegt ist, während einer Trocknungsphase eine Adsorptionsphase der Sorptionseinheit (41) einzuleiten, um genau zu sein, durch Einschalten des Gebläses (44) derart, dass Luft aus der Behandlungskammer (2) durch die Sorptionseinheit (41) herausgeführt wird, so dass das Trockengut der Sorptionseinheit (41) Feuchtigkeit von dem Luftstrom absorbiert, wonach die Luft zurück in die Behandlungskammer (2) eingespeist wird.

10. Geschirrspüler (1) nach einem der Ansprüche 7 bis 9,
wobei die Frischwasserzuführvorrichtung einen Frischwasserbehälter (6) besitzt, der mit einer Frischwasserversorgungsleitung (30) verbunden ist oder verbunden werden kann und dessen Auslauf mit der Ansaugseite der mindestens einen Abschlussspülpumpe (14; 14a, 14b) verbunden ist.

11. Geschirrspüler (1) nach einem der Ansprüche 7 bis 10,
wobei die Frischwasserzuführvorrichtung einen Boiler (22) besitzt, der mit einer Frischwasserversorgungsleitung (30) verbunden ist, um gegebenenfalls das Abschlussspülfluid zu erwärmen, das während der Frischwasserabschlussspülphase in die Behandlungskammer (2) zu pumpen ist, wobei der Auslauf des Boilers mit der Ansaugseite der mindestens einen Abschlussspülpumpe (14; 14a, 14b) verbunden ist.

12. Geschirrspüler (1) nach einem der Ansprüche 7 bis 11,
wobei das Dampfabschlussspülsystem ferner einen Dampfgenerator (39) besitzt, der mit einer Frischwasserversorgungsleitung (30) verbunden ist oder verbunden werden kann, um gegebenenfalls zusätzlichen Dampf während der Dampfabschlussspülphase erzeugen, wobei der Dampfgenerator (39) durch eine Dampfleitung (40) mit der Behandlungskammer (2) verbunden ist, um den zusätzlich erzeugten Dampf gegebenenfalls in die Behandlungskammer (2) einzuführen,
wobei die Dampfleitung (40) mit der Behandlungskammer (2) an einem Ort verbunden ist, der sich höher als der Tank (12) befindet.

13. Geschirrspüler (1) nach Anspruch 11 in Verbindung mit Anspruch 12, wobei der Dampfgenerator (39) in den Boiler (22) integriert ist.

14. Geschirrspüler (1) nach einem der Ansprüche 12 oder 13,
wobei außerdem eine Sensorvorrichtung (52) vorgesehen ist, um die Gesamtfeuchtigkeitsmenge, die durch das Trockengut der Sorptionseinheit (41) absorbiert wird, zu detektieren, wobei die Programmsteuervorrichtung (101) ausgelegt ist, vorzugsweise wahlweise automatisch den Dampfgenerator (39) während der Dampfabschlussspülphase zu verbinden, wenn die beim Start der Dampfabschlussspülphase mit der Sensorvorrichtung (52) detektierte und durch das Trockengut absorbierte Feuchtigkeitsmenge kleiner als ein vorher definierter oder definierbarer unterer Schwellenwert ist.

15. Geschirrspüler (1) nach einem der Ansprüche 7 bis 14,
wobei außerdem eine Sensorvorrichtung (52) vorgesehen ist, um die durch das Trockengut der Sorptionseinheit (41) absorbierte Gesamtfeuchtigkeitsmenge zu detektieren, wobei die Programmsteuervorrichtung (101) ausgelegt ist, die Dampfabschlussspülphase zu beenden, sobald eine vorher definierte oder definierbare Feuchtigkeitsmenge von dem Trockengut desorbiert wurde.

## Revendications

1. Procédé de mise en oeuvre d'un lave-vaisselle (1) configuré comme une machine actionnée par programme, ledit lave-vaisselle étant doté d'une chambre (2) de traitement servant à recevoir des articles de lavage à nettoyer,
le procédé comportant les étapes de procédé suivantes :
i) pendant une phase d'adsorption, de l'air est conduit hors de la chambre (2) de traitement à travers une unité (41) de sorption dotée d'un matériau sec à déshydratation réversible de telle façon que le matériau sec absorbe de l'humidité à partir de l'écoulement d'air, après quoi l'air est renvoyé à la chambre (2) de traitement ; et
ii) pendant une phase de désorption, le matériau sec de l'unité (41) de sorption est chauffé et de l'air est conduit hors de la chambre (2) de traitement à travers l'unité (41) de sorption dotée du matériau sec chauffé de telle façon que de l'humidité soit désorbée du matériau sec et au moins une partie de l'énergie thermique introduite auparavant dans le matériau sec, et au moins une partie de l'humidité désorbée du matériau sec, est évacuée de l'unité (41) de sorption sous forme de vapeur avec l'aide de l'écoulement d'air conduit à travers l'unité (41) de sorption,
au moins une partie de la vapeur évacuée de l'unité (41) de sorption lors de l'étape de procédé ii) étant conduite jusque dans la chambre (2) de traitement,
le procédé comprenant en outre les étapes de procédé suivantes, de préférence commandées par programme, qui sont à exécuter consécutivement :
a) pendant une phase de lavage, du liquide de lavage est pulvérisé à partir d'un réservoir (12) avec l'aide d'une pompe (13) de lavage via un système (16) de conduites de lavage, à travers des buses (11a, 11b) de lavage, jusque dans la chambre (2) de traitement, au moins une partie du liquide de lavage pulvérisé refluant par gravité de la chambre (2) de traitement jusque dans le réservoir (12) ; et
b) pendant une phase de rinçage final, du fluide de rinçage final est conduit dans la chambre (2) de traitement,
la phase de rinçage final étant composé d'une phase de rinçage final à l'eau douce, lors de laquelle un liquide de rinçage final est pulvérisé à travers un système (17, 17a, 17b) de conduites de rinçage final jusque dans la chambre (2) de traitement et au moins une partie du liquide de rinçage final pulvérisé refluant par gravité de la chambre (2) de traitement jusque dans le réservoir (12),
**caractérisé par**
une phase de rinçage final à la vapeur, lors de laquelle au moins une partie de la vapeur évacuée de l'unité (41) de sorption lors de l'étape de procédé ii) est conduite dans la chambre (2) de traitement,
la phase de rinçage final à la vapeur commençant après l'achèvement de la phase de rinçage final à l'eau douce, ou étant effectuée préalablement à la phase de rinçage final à l'eau douce, ou la phase de rinçage final à la vapeur et la phase de rinçage final à l'eau douce se chevauchant chronologiquement au moins partiellement.

2. Procédé selon la revendication 1,
le matériau sec de l'unité (41) de sorption étant chauffé lors de l'étape de procédé ii) par un apport d'énergie thermique, et
l'air étant conduit, avec un retard ou simultanément à l'apport d'énergie thermique, hors de la chambre (2) de traitement à travers l'unité (41) de sorption.

3. Procédé selon l'une des revendications 1 et 2,
la phase de rinçage final à la vapeur occupant une période de 5 à 60 secondes et de préférence une période de 10 à 30 secondes, et/ou
pendant la phase de rinçage final à la vapeur, un total de 20 à 150 g, de préférence 30 à 100 g, et idéalement 40 à 70 g d'eau étant amené à l'état de vapeur jusqu'à la chambre (2) de traitement.

4. Procédé selon l'une des revendications 1 à 3,
le procédé comportant en outre les étapes de procédé suivantes, de préférence commandées par programme :
c) pendant une phase de condensation et de vidange, qui a lieu après l'achèvement de la phase de rinçage final à la vapeur, la vapeur introduite pendant la phase de rinçage final à la vapeur dans la chambre (2) de traitement se condense au moins partiellement et le condensat ainsi formé se déverse par gravité au moins partiellement hors de la chambre (2) de traitement.

5. Procédé selon la revendication 4,
le procédé comportant en outre l'étape de procédé suivante, de préférence optionnelle :
d) pendant une phase de séchage, qui a lieu après l'achèvement de la phase de condensation et de vidange, un circuit d'air est formé dans la chambre (2) de traitement pour le séchage d'articles de lavage logés dans la chambre (2) de traitement,
au moins une partie de l'air de séchage qui circule dans la chambre (2) de traitement étant conduite à travers l'unité (41) de sorption dotée du matériau sec à déshydratation réversible et étant ensuite renvoyée à la chambre (2) de traitement.

6. Procédé selon la revendication 5,
l'étape de procédé i) étant simultanée à la phase de séchage ou la chevauchant chronologiquement, et
l'étape de procédé ii) étant effectuée immédiatement avant ou simultanément à la phase de rinçage final, en particulier la phase de rinçage final à la vapeur.

7. Lave-vaisselle (1), en particulier lave-vaisselle commercial (1), configuré comme une machine actionnée par programme et comprenant ce qui suit :
- une chambre (2) de traitement, dans et de laquelle des articles de lavage peuvent être insérés et retirés manuellement ;
- un réservoir (12), dans lequel du liquide peut se déverser par gravité à partir de la chambre (2) de traitement ;
- un système de lavage doté d'une pompe (13) de lavage et d'un système (16) de conduites de lavage servant à acheminer du liquide de lavage hors du réservoir (12) pendant une phase de lavage et à pulvériser le liquide de lavage à travers des buses (11a, 11b) de lavage dans la chambre (2) de traitement ;
- un système de rinçage final à l'eau douce doté d'au moins une pompe (14 ; 14a, 14b) de rinçage final et d'au moins un système (17, 17a, 17b) de conduites de rinçage final servant à acheminer du liquide de rinçage final hors d'un dispositif d'alimentation en eau douce pendant une phase de rinçage final à l'eau douce et à pulvériser le liquide de rinçage final à travers des buses (15a, 15b) de rinçage final dans la chambre (2) de traitement ; et
- un dispositif (101) de commande par programme servant à exécuter au moins un programme de nettoyage, le dispositif (101) de commande par programme étant configuré de telle façon que, dans un cycle de nettoyage, d'abord la phase de lavage, et ultérieurement la phase de rinçage final à l'eau douce sont réalisées,
**caractérisé par**
- un système de rinçage final à la vapeur servant à générer de la vapeur et à conduire la vapeur jusque dans la chambre (2) de traitement pendant une phase de rinçage final à la vapeur ;
le système de rinçage final à la vapeur comprenant une unité (41) de sorption, dotée d'un matériau sec à déshydratation réversible, d'un ventilateur (44) servant à la formation, lorsque nécessaire, d'un circuit d'air, de telle façon qu'au moins une partie de l'air soit conduit hors de la chambre (2) de traitement à travers l'unité (41) de sorption et renvoyé ensuite à la chambre (2) de traitement, et d'un dispositif (45) de chauffe, servant, lorsque nécessaire, à chauffer le matériau sec pendant une phase de désorption de l'unité (41) de sorption, et
le dispositif (101) de commande par programme étant conçu pour déclencher, pendant la phase de rinçage final à la vapeur, la phase de désorption de l'unité (41) de sorption, précisément par activation du dispositif (45) de chauffe et amenée d'énergie thermique au matériau sec, et par mise en marche du ventilateur (44) de telle façon que de l'air soit conduit hors de la chambre (2) de traitement à travers l'unité (41) de sorption dotée du matériau sec chauffé, de telle sorte que de l'humidité soit désorbée du matériau sec et qu'au moins une partie de l'énergie thermique introduite auparavant dans le matériau sec, ainsi qu'au moins une partie de l'humidité désorbée du matériau sec, avec l'aide de l'écoulement d'air conduit à travers l'unité (41) de sorption, soit évacuée de l'unité (41) de sorption sous forme de vapeur et introduite dans la chambre (2) de traitement.

8. Lave-vaisselle (1) selon la revendication 7,
le dispositif (45) de chauffe affecté à l'unité (41) de sorption étant conçu pour, au cours de la phase de désorption, par l'apport d'énergie électrique et/ou de chaleur, chauffer le matériau sec de l'unité (41) de sorption de telle façon que de l'humidité absorbée auparavant par le matériau sec soit de nouveau libérée au moins partiellement par le matériau sec,
le matériau sec comprenant de la zéolite, en particulier de la zéolite de type Y.

9. Lave-vaisselle (1) selon l'une des revendications 7 ou 8,
le dispositif (101) de commande par programme étant conçu pour, pendant une phase de séchage, déclencher une phase d'adsorption de l'unité (41) de sorption, précisément par mise en marche du ventilateur (44) de telle façon que de l'air soit conduit hors de la chambre (2) de traitement à travers l'unité (41) de sorption, de telle sorte que le matériau sec de l'unité (41) de sorption absorbe de l'humidité à partir de l'écoulement d'air, après quoi l'air est renvoyé à la chambre (2) de traitement.

10. Lave-vaisselle (1) selon l'une des revendications 7 à 9,
le dispositif d'alimentation en eau douce comprenant un récipient (6) d'eau douce, qui est ou peut être relié à une conduite (30) d'alimentation en eau douce et dont la sortie est reliée au côté aspiration de la ou des pompes (14 ; 14a, 14b) de rinçage final.

11. Lave-vaisselle (1) selon l'une des revendications 7 à 10,
le dispositif d'alimentation en eau douce comprenant une chaudière (22) relié à une conduite (30) d'alimentation en eau douce, pour, lorsque nécessaire, réchauffer le liquide de rinçage final à pomper dans la chambre (2) de traitement pendant la phase de rinçage final à l'eau douce, la sortie de la chaudière étant reliée au côté aspiration de la ou des pompes (14 ; 14a, 14b) de rinçage final.

12. Lave-vaisselle (1) selon l'une des revendications 7 à 11,
le système de rinçage final à la vapeur comprenant en outre un générateur (39) de vapeur, relié ou pouvant être relié à une conduite (30) d'alimentation en eau douce, pour, lorsque nécessaire, générer de la vapeur supplémentaire pendant la phase de rinçage final à la vapeur, le générateur (39) de vapeur étant relié par une conduite (40) de vapeur à la chambre (2) de traitement afin d'introduire la vapeur supplémentaire générée, lorsque nécessaire, dans la chambre (2) de traitement,
la conduite (40) de vapeur étant reliée à la chambre (2) de traitement à un emplacement situé plus haut que le réservoir (12).

13. Lave-vaisselle (1) selon la revendication 11 en combinaison avec la revendication 12,
le générateur (39) de vapeur étant intégré dans la chaudière (22) .

14. Lave-vaisselle (1) selon l'une des revendications 12 et 13,
un dispositif (52) de capteur étant également mis en place, pour détecter la quantité totale d'humidité absorbée par le matériau sec de l'unité (41) de sorption, le dispositif (101) de commande par programme étant conçu pour raccorder automatiquement, de préférence sélectivement, le générateur (39) de vapeur pendant la phase de rinçage final à la vapeur si la quantité d'humidité détectée à l'aide du dispositif (52) de capteur au début de la phase de rinçage final à la vapeur et absorbée par le matériau sec est inférieure à une valeur seuil inférieure définie ou pouvant être définie auparavant.

15. Lave-vaisselle (1) selon l'une des revendications 7 à 14,
un dispositif (52) de capteur est également mis en place, pour détecter la quantité totale d'humidité absorbée par le matériau sec de l'unité (41) de sorption, le dispositif (101) de commande par programme étant conçu pour mettre fin à la phase de rinçage final à la vapeur dès qu'une quantité d'humidité définie ou pouvant être définie auparavant a été désorbée du matériau sec.
